# EUROPEAN PATENT APPLICATION

(11) **EP 2 381 306 A1**
(43) Date of publication of application: **26.10.2011**
(21) Application number: 11161302.2
(22) Date of filing: 06.04.2011
(51) Int. Cl.: G03B 42/02

(54) **Radiographic cassette**

(30) Priority: 20.04.2010 JP 2010096567
(71) Applicant: Fujifilm Corporation, Minato-ku Tokyo (JP)
(72) Inventor: Horiuchi, Hisatsugu, Kanagawa (JP)
(74) Representative: Metzler, Volker

(57) **Abstract**

A radiographic cassette (13) is provided with a slip-property changing mechanism (17) for changing slip properties of a bottom side ( 15b) of a housing (15) of the cassette. The slip-property changing mechanism (17) includes a foot (21) mounted movable between a retracted position inside the housing (15) and a protruded position where a distal end of the foot (21) protrude outward from the bottom side (15b). A rubber (22) is attached to an end face of the distal end of the foot, lowering surface smoothness of the bottom side (15b) in the protruded position.

## Description

### BACKGROUND OF THE INVENTION

### 1. Field of the Invention

The present invention relates to a radiographic cassette.

### 2. Description of the Related Art

A radiography system projects radiation or X-rays toward a specimen such as a patient body, to detect the rays penetrating the specimen by a detector, such as a sheet of radiographic film, an imaging plate (IP) or a plate panel detector (FPD). The radiographic detector contained in a housing of a rectangular prism shape is called a radiographic cassette. Hereinafter, the radiographic cassette will be referred to simply as the cassette.

The cassette is portable and easy to handle so that it may permit capturing images from various portions of the specimen. For example, the cassette inserted in between a bed and a patient lying on the bed can take an image from the chest or the abdomen of the patient. While a patient sitting on a chair puts his or her arm on the cassette on a table, an image of the joint of his or her shoulder joint or cubital joint may be captured.

JPA 2006-058366 discloses a radiographic cassette which has an annular or endless sheet wrapped around the cassette housing so as to be slidable in a particular direction on the housing, and a braking mechanism for this sheet. This prior art cassette is adapted to ease the load on the operator or radiologist when squeezing the cassette into between a bed and a specimen on the bed in the same direction as the slidable direction of the sheet. While the sheet is locked by the braking mechanism, the cassette is prevented from slipping even when an external force is applied to the cassette, for example, as a patient puts his or her arm on the cassette.

In the above prior art, the sheet is designed to have a relatively high friction factor for the purpose of effectively preventing the cassette from slipping while the sheet is braked. Such a high friction factor of the sheet, however, makes it difficult to adjust the position or attitude of the cassette after having been inserted into between the bed and the patient on the bed.

### SUMMARY OF THE INVENTION

In view of the foregoing, an object of the present invention is to provide a radiographic cassette that will reduce the load on the radiologist in adjusting the position or attitude of the cassette in between a bed and a patient on the bed.

To achieve the above and other objects, a radiographic cassette of the present invention includes a housing containing a radiographic detector therein, and at least a foot mounted in the housing. The housing has an irradiation surface on a top side thereof for receiving radioactive rays from above. The foot is movable between a protruded position where the foot protrudes outward from a bottom side of the housing opposite to the irradiation surface, and a retracted position where the foot is contained inside the housing. The radiographic cassette of the present invention also includes a switching device for switching the foot between the protruded position and the retracted position, thereby to change slip properties of the bottom side of the housing.

Preferably, the foot is adapted to lower surface smoothness of the bottom side of the housing in the protruded position than in the retracted position.

Preferably, the radiographic cassette further includes a mechanism for causing the foot to move to the retracted position when a load of not less than a predetermined amount is applied to the irradiation surface while the cassette is placed with the bottom side down and the foot in the protruded position.

Preferably, the foot includes a plurality of feet.

The foot may preferably be manually movable between the protruded position and the retracted position.

The switching device may preferably include a push button that may be pushed into the housing, the push button directly acting on the foot in the retracted position to cause the foot to move from the retracted position to the protruded position with the push button being pushed. The push button preferably has a top face that is flat to an external surface of the housing or set back inward from the external surface.

Preferably, the housing has a recess around the top face of the push button. The recess preferably has an external diameter of 10 mm to 30 mm.

Preferably, the switching device may include an interlocking mechanism for interlocking a plurality of the feet with each other.

The switching device may also include an actuator for driving the foot to move between the protruded position and the retracted position. The switching device may further include a controller for controlling the actuator to switch over the foot automatically between the protruded position and the retracted position according to imaging menus.

Preferably, the foot is movable along a line perpendicular to the bottom side of the housing.

The foot preferably has an end face having a higher friction factor than an external surface of the bottom side of the housing, the end face being brought into contact with a surface on which the cassette is placed with the foot in the protruded position.

The radiographic cassette of the present invention may change the slip properties of the bottom side of its housing by switching the foot or feet between the protruded position and the retracted position. Thus, when the cassette should be maintained immovable, the surface smoothness of the bottom side of the cassette may be lowered to prevent it from slipping. On the other hand, when the cassette should be moved for positioning or adjustment, the surface of the bottom side may be made smoother to ease the labor.

### BRIEF DESCRIPTION OF THE DRAWINGS

The above and other objects and advantages of the present invention will be more apparent from the following detailed description of the preferred embodiments when read in connection with the accompanied drawings, wherein like reference numerals designate like or corresponding parts throughout the several views, and wherein:
Figure 1 is a schematic diagram illustrating a radiography system;
Figure 2A is a perspective view of a cassette of the radiography system in accordance with a first embodiment, viewed from an irradiated obverse side;
Figure 2B is a perspective view of the cassette in accordance with the first embodiment, viewed from a reverse or bottom side;
Figure 3 is a sectional view of the cassette in accordance with the first embodiment, schematically illustrating a slip-property changing mechanism thereof;
Figures 4A to 4E are sectional views of the cassette illustrating a sequence of operations of the slip-property changing mechanism in the first embodiment;
Figure 5A is an explanatory diagram of the cassette in a position where feet are located within the cassette;
Figure 5B is an explanatory diagram of the cassette in a position where the feet are protruded out of the cassette;
Figure 6 is a sectional view of a cassette having a slip-property changing mechanism in accordance with a second embodiment;
Figures 7A to 7F are sectional views of the cassette of Fig. 6, illustrating a sequence of operations of the slip-property changing mechanism in the second embodiment;
Figure 8 is a sectional view of a cassette having a slip-property changing mechanism in accordance with a third embodiment;
Figures 9A to 9E are sectional views of the cassette of Fig. 8, illustrating the operation sequence of the slip-property changing mechanism in the third embodiment;
Figure 10 is a sectional view of a cassette having a slip-property changing mechanism in accordance with a fourth embodiment;
Figure 11 is a perspective view of a cassette having a slip-property changing mechanism in accordance with a fifth embodiment;
Figures 12A and 12B are sectional view of the cassette of Fig.11, illustrating a sequence of operations of the slip-property changing mechanism in the fifth embodiment;
Figure 13 is a perspective view of a cassette having a slip-property changing mechanism in accordance with a sixth embodiment;
Figures 14A and 14B are sectional view of the cassette of Fig.13, illustrating a sequence of operations of the slip-property changing mechanism in the sixth embodiment;
Figure 15 is a perspective view a cassette having a slip-property changing mechanism in accordance with a seventh embodiment;
Figure 16 is a perspective view a cassette having a slip-property changing mechanism in accordance with an eighth embodiment; and

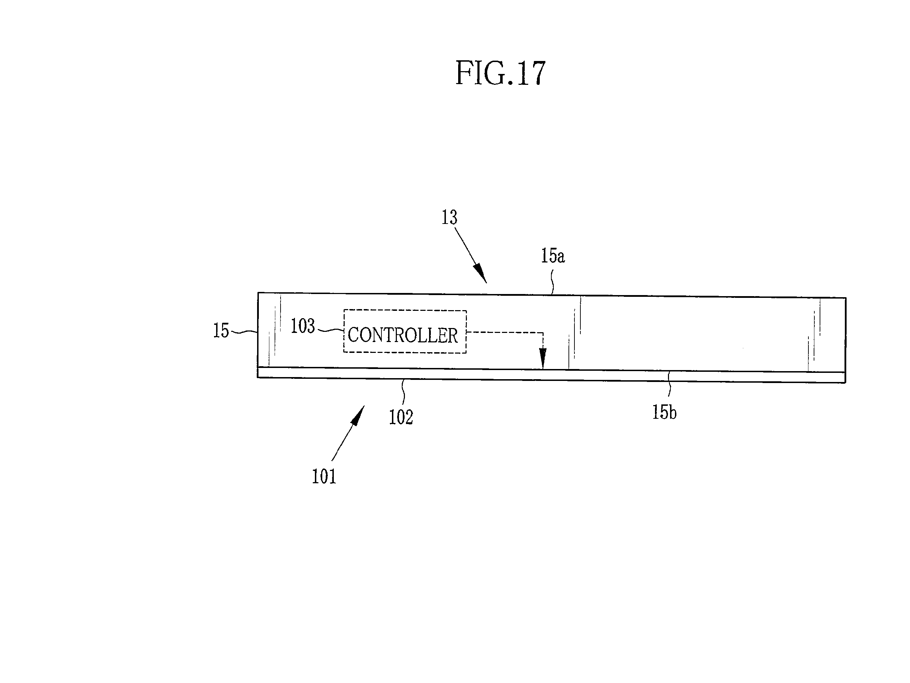

Figure 17 is a perspective view a cassette having a slip-property changing mechanism in accordance with a ninth embodiment.

### DETAILED DESCRIPTION OF THE PREFERRED EMBODIMENTS

### [First Embodiment]

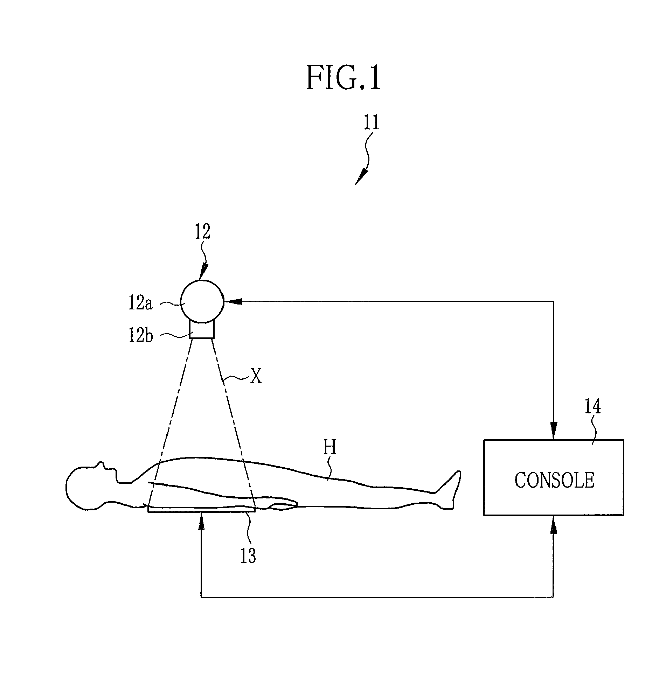

As shown in Fig.1, a radiography system 11 consists of a radiation generator 12 for irradiating a specimen or patient H with radioactive rays X, e.g. X-rays, a cassette 13 for detecting X-rays X penetrating the patient H, and a console 14 for controlling the 12 and the cassette 13. The 12 and the cassette 13 are installed in a radiography chamber, whereas the 14 is installed in a control chamber adjacent to the radiography chamber.

The 12 is constituted of an X-ray tube 12a for generating X-rays X, and a collimator 12b for confining X-rays X from the 12a to a limited irradiation range. The 12 is held on a not-shown carriage device in a movable manner. For example, the 12 may be moved by the carriage device to a position opposing to the cassette 13, so that the X-ray irradiation range may change according to a designated portion or site of the specimen H that may be designated through the 14.

The cassette 13 generally has an outer size that can cover the human's chest or trunk. The cassette 13 is portable and easy to handle, so that the cassette 13 may be set in a fixed radiography system installed in the radiography chamber or may be carried about outside the radiography chamber, e.g. in diagnosis and treatment departments or hospital rooms. The cassette 13 can wirelessly communicate with the 14 and is controlled on the basis of signals from the 14.

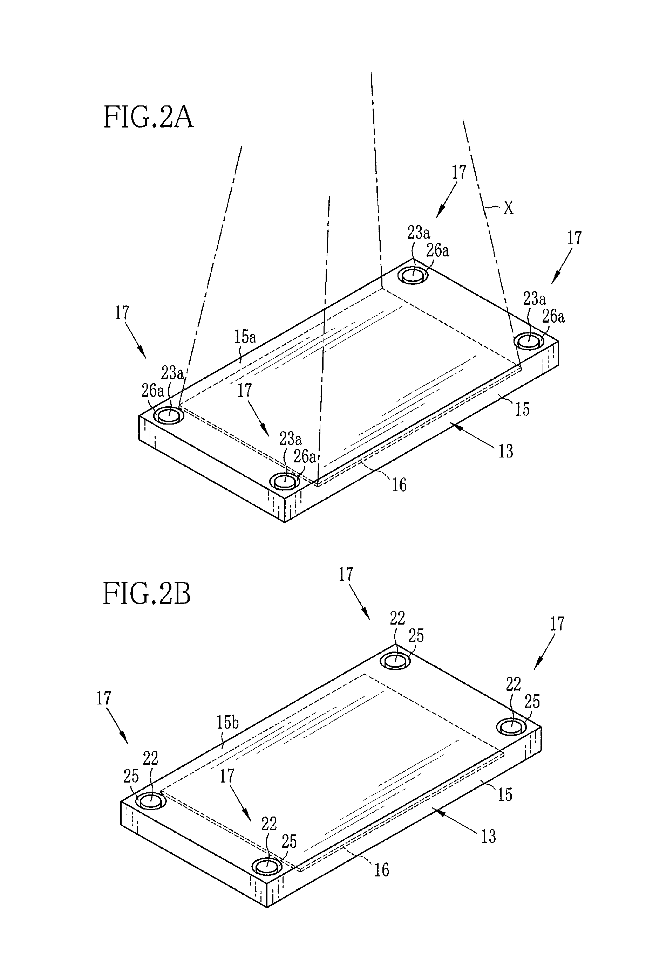

Figs. 2A and 2B show a first embodiment of the cassette 13. The cassette 13 includes a housing 15 having an irradiation surface 15a on its top or obverse side, and a radiation detector 16 mounted in the housing to detect the X-rays X entering through the irradiation surface 15a. The 16 may be X-ray film, IP, FPD or any other device that can detect X-rays. The cassette 13 is also provided with slip-property changing mechanisms 17 for changing slip properties of a bottom side 15b of the housing 15. As shown in Figs. 2A and 2B, the slip-property changing mechanisms 17 are mounted in the housing 15, one for each corner of the housing 15.

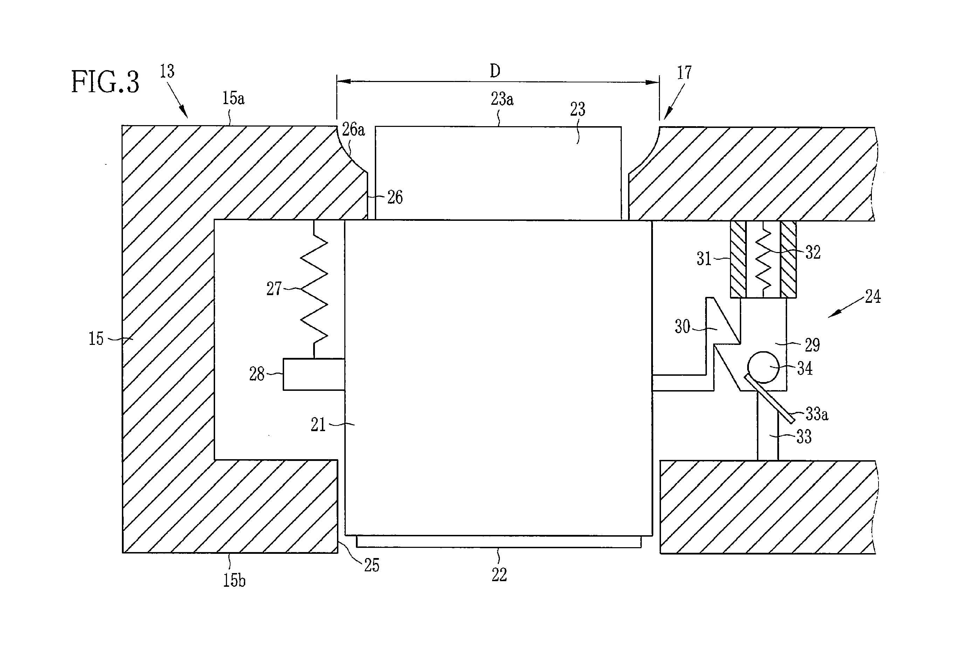

As shown in detail in Fig.3, each of the slip-property changing mechanisms 17 consists of a foot 21, a rubber 22 attached to a bottom face of the foot 21, a push button 23 , and a positioning mechanism 24. The foot 21 is mounted movable into or out of the housing 15 through an opening 25 that is formed in each corner of the bottom side 15b. The push button 23 is exposed through an opening 26 that is formed in each corner of the irradiation surface 15a. The opening 26 has a recess 26a for facilitating pushing down the push button 23. The recess 26 preferably has an external diameter D of 10 mm to 30 mm. Setting the diameter D to this range will make it easier to push down the push button 23 with a finger but prevent the push button 23 from being unexpectedly pushed down by the body of the patient or the like that will touch the irradiation surface 15a.

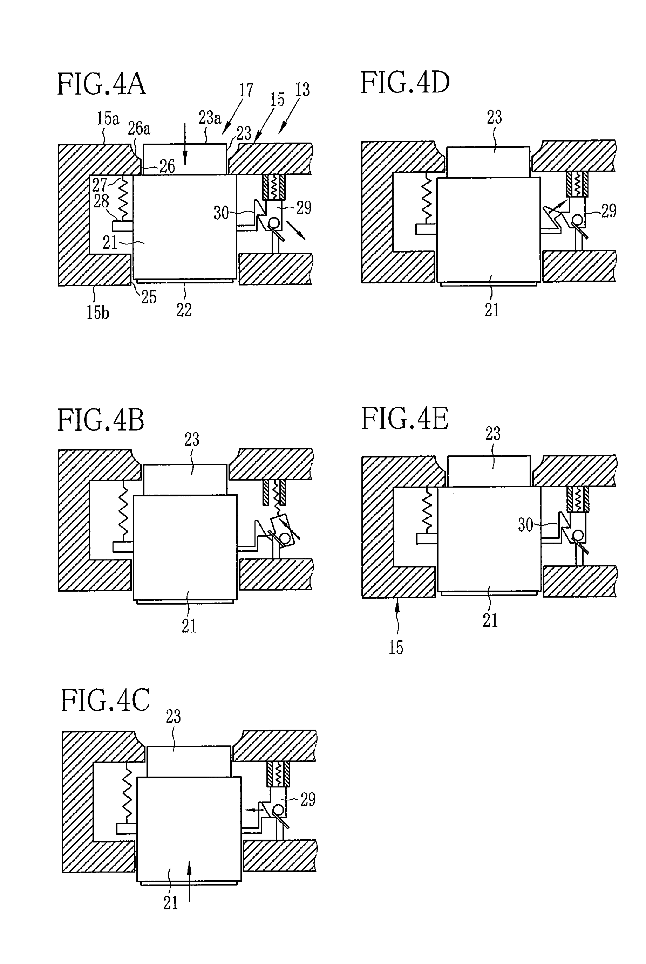

The foot 21 is cylindrical and movable in it axial direction that is perpendicular to the bottom side 15b. The foot 21 is configured to be movable between a protruded position, as shown in Fig.4C, where the bottom of the foot 21 protrudes out of the bottom side 15b, and a retracted position as shown in Fig.4A, where the foot 21 is totally inside the housing 15. The rubber 22 has a higher friction factor than the bottom side 15b of the housing 15. As the foot 21 moves to the protruded position, the rubber 22 on the bottom face of the foot 21 protrudes outward from the bottom side 15b, lowering the smoothness of the bottom side 15b. When the foot 21 is in the retracted position, the rubber 22 is located inside the housing 15, so the bottom side 15b provides the better slip properties.

The push button 23 is cylindrical and has a top face 23a that is positioned flat to the irradiation surface 15a of the housing 15 when the foot 21 is in the retracted position. Not protruding out of the irradiation surface 15a, the push button 23 does not bother the patient while the patient's body is in contact with the irradiation surface 15a. The push button 23 is secured at its bottom to the foot 21 and acts directly on the foot 21. Thus, push the push button 23 into the housing 15, the foot 21 will be brought to the protruded position.

The positioning mechanism 24 is mounted inside the housing 15. The positioning mechanism 24 includes a coil spring 27, a coupling member 28 for coupling one end of the coil spring 27 to a side portion of the foot 21, a latch member 29, a hook 30, a base 31, a coil spring 32, a guide member 33, and a guide protrusion 34. The coil spring 27 connects the foot 21 to an inner surface of the housing 15 and urges the foot 21 toward the retracted position. The coupling member 28 is disposed on a side portion of the foot 21. The latch member 29 latches the foot 21 at the protruded position or the retracted position. The hook 30 is provided on a side portion of the foot 21 so as to cooperate with the latch member 29. The base 31 is shaped into a cylindrical tube and secured to an inner surface portion of the housing 15. The coil spring 32 is mounted in the base 31 to connect the latch member 29 to the inner surface portion of the housing 15. The guide member 33 has a guide surface 33a for guiding the latch member 29 as moving against the urging force of the coil spring 32. The guide protrusion 34 is provided on one side of the latch member 29 and engaged with the guide surface 33a so that the latch member 29 moves along the guide surface 33a.

With the push button 23 being pushed down, as shown in Figs.4A and 4B, the foot 21 moves from the retracted position to the protruded position against the urging force of the coil spring 27. As a result, the latch member 29 being engaged with the hook 30 is pushed down to move off the base 31 against the urging force of the coil spring 32, and is further moved downward along the guide surface 33a, which removes the latch member 29 from the hook 30.

As shown in Figs.4B and 4C, when the foot 21 reaches the protruded position, the latch member 29 gets over the hook 30 and then moves upward according to the urging force of the coil spring 32, and is stopped against the base 31. In this position, the latch member 29 is engaged with the hook 30 such that the foot 21 is held in the protruded position even after the finger quits pushing the push button 23 and removes from the top face 23a of the push button 23.

As shown in Figs.4C and 4D, when a load of more than a predetermined amount, e.g. 5 kg, is applied to the bottom face of the foot 21, the foot 21 moves from the protruded position to the retracted position. As the foot 21 moves to the retracted position, the hook 30 as engaged with the latch member 29 resiliently bends in a direction to leave the latch member 29.

When the foot 21 reaches the retracted position, as shown in Figs. 4D and 4E, the hook 30 gets over the latch member 29 and then returns to an initial position owing to its own resiliency. In the initial position, the hook 30 is latched by the latch member 29 to hold the foot 21 in the retracted position. Thus, the latch member 29 and the hook 30 also function as a retracting mechanism that causes the feet 21 to retract into the housing 15 when a load of more than the predetermined amount is applied onto the irradiation surface 15a while the cassette 13 is placed with the bottom side 15b down and the feet 21 in the protruded position.

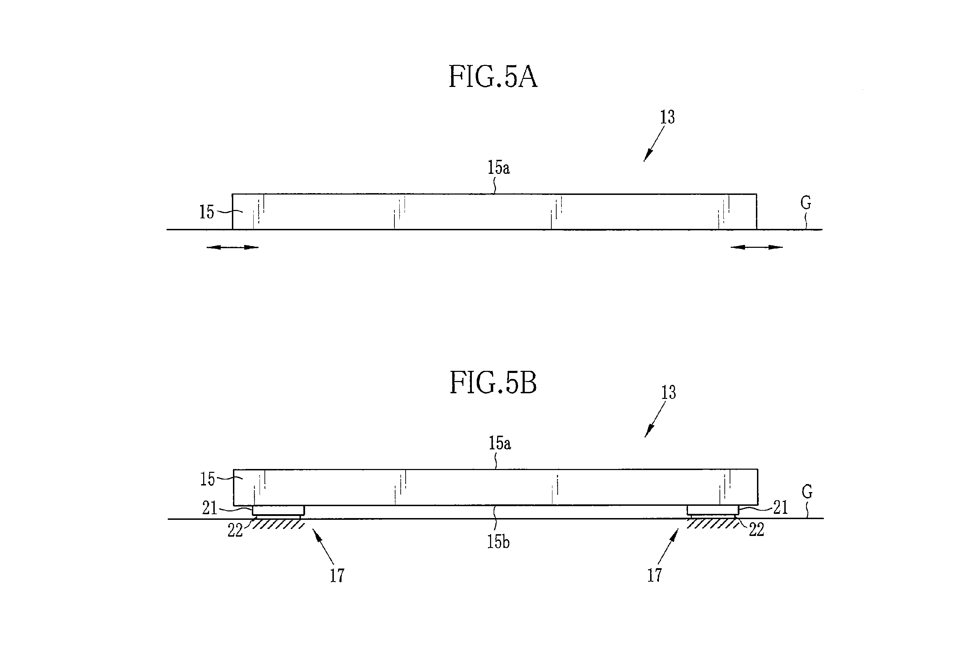

As shown in Fig.5A, while the cassette 13 is placed on a surface G, e.g. a bed surface, with the bottom side 15b down and the feet 21 in the retracted position, the bottom side 15b is in direct contact with the surface G. On the other hand, while the cassette 13 is placed on the surface G with the bottom side 15b down and the feet 21 in the protruded position, as shown in Fig. 5B, the rubbers 22 on the bottom faces of the feet 21 are in contact with the surface G. That is, the bottom side 15b indirectly contacts the G. With the rubbers 22 in contact with the surface G, the cassette 13 cannot slide smoothly on the surface G. It means that the slip properties of the bottom side 15b is relatively high while the feet 21 are in the retracted position, and the slip properties gets low when the feet 21 are set in the protruded position.

Accordingly, putting the feet 21 to the protruded position will prevent the cassette 13 from slipping. Retracting the feet 21 into the housing 15 will reduce the load for adjusting the position or attitude of the cassette 13 in between the surface G and the specimen body H.

### [Second Embodiment]

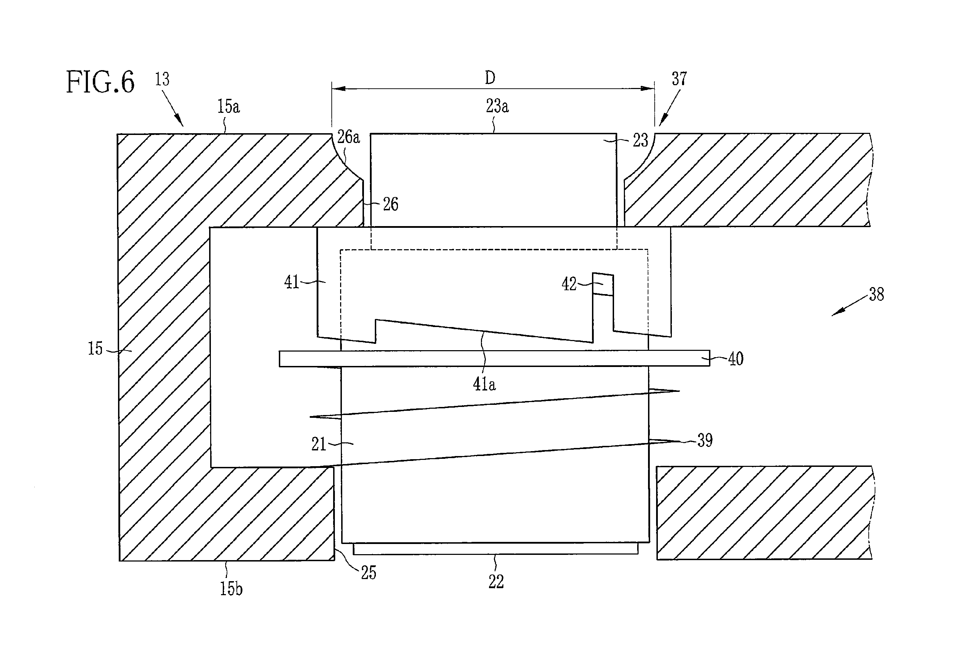

Referring now to Fig.6, a radiographic cassette 13 in accordance with a second embodiment will be described. In the second embodiment, the cassette 13 has slip-property changing mechanisms 37 in place of the above-described slip-property changing mechanisms 17. Each of the slip-property changing mechanisms 37 consists of a foot 21, a rubber 22 attached to a bottom face of the foot 21, a push button 23 attached to a top face of the foot 21, and a positioning mechanism 38. Like the first embodiment, the foot 21 is mounted movable between a retracted position located totally within a housing 15 and a protruded position where the bottom face protrudes outward from a bottom side 15b of the housing 15.

It is to be noted that those components which are substantially equivalent to those described with respect to the first embodiment are designated by the same reference numerals as in the first embodiment, and the description of these components will be omitted in the second and following embodiments. In the following description, equivalent features, operations, and effects of the later-described embodiments to the former-described embodiments will be omitted in order to avoid redundancy.

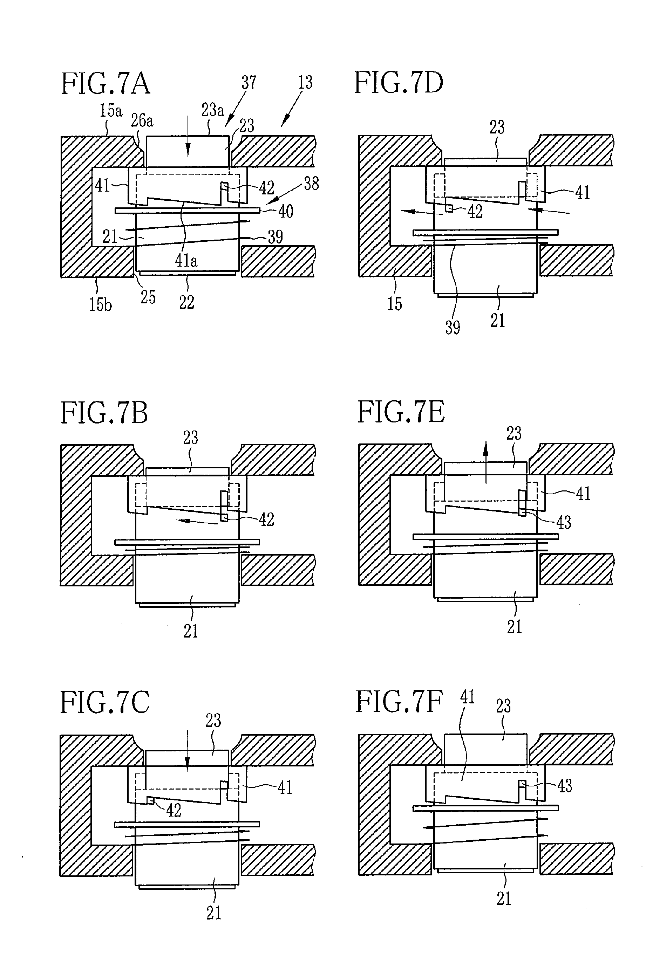

The positioning mechanism 38 includes a coil spring 39, an annular coupling member 40, a guide member 41, and guide protrusions 42 and 43 which protrude radially from a side surface of the foot 21 (see also Fig.7E). The coil spring 39 is coiled around the foot 21 and is coupled at its one end to the coupling member 40 that is provided on the circumference of the foot 21. Thus, the coil spring 39 urges the foot 21 to move toward the retracted position as well as in a clockwise direction.

The guide member 41 is shaped like a crown, and a top end of the foot 21 is fitted therein. The guide member 41 has a lower edge that constitutes a circular guide rail 41a. The guide rail 41a has four serial slopes of the same inclining direction, and a step or a notch is provided between every adjacent two of these slopes. The steps are arranged alternately with the notches. That is, the guide rail 41a consists of slope, step, slop, notch, slope, step, slop, and notch arranged cyclically in this order. In the retracted position of the foot 21, as shown in Fig. 6, the guide protrusions 42 and 43 are trapped in the notches (see also Fig.7F).

When a pushing force is applied to the push button 23, as shown in Fig. 7A, the foot 21 moves toward the protruded position against the force of the coil spring 39. At the same time, the guide protrusions 42 and 43 move down. When the foot 21 moves down beyond the protruded position, as shown in Fig. 7B, the guide protrusions 42 and 43 get out of the notches and caught on the peaks of the adjacent slopes.

Thereafter when the push button 23 is released from the push-down force on the top face 23a, the foot 21 will go up according to the force of the coil spring 39. As a result, the guide protrusions 42 and 43 move along the slopes, as shown in Fig. 7B, rotating the foot 21 clockwise. As the guide protrusions 42 and 43 finally stop against the steps, holding the foot 21 in the protruded position, as shown in Fig.7C.

When the push button 23 is pushed down while the foot 21 is in the protruded position, the foot 21 is moved further downward from the protruded position, as shown in Fig.7D. As a result, the guide protrusions 42 and 43 move down and get over the steps of the guide rail 41a and then get hooked on the peaks of the adjacent slopes. Thereafter when the push button 23 is released from the push-down force on the top face 23a, the force of the coil spring 39 will cause the foot 21 to move upward while rotating clockwise, as shown in Fig.7D, so that the guide protrusions 42 and 43 move along the slopes.

When the guide protrusions 42 and 43 come to face the notches, as shown in Fig.7E, the foot 21 moves straightly upward according to the force of the coil spring 39, with the guide protrusions 42 and 43 sliding upward along the notches. When the guide protrusions 42 and 43 are stopped against the inner ends of the notches, the foot 21 reaches the retracted position. Thus, the foot 21 is held in the retracted position.

### [Third Embodiment]

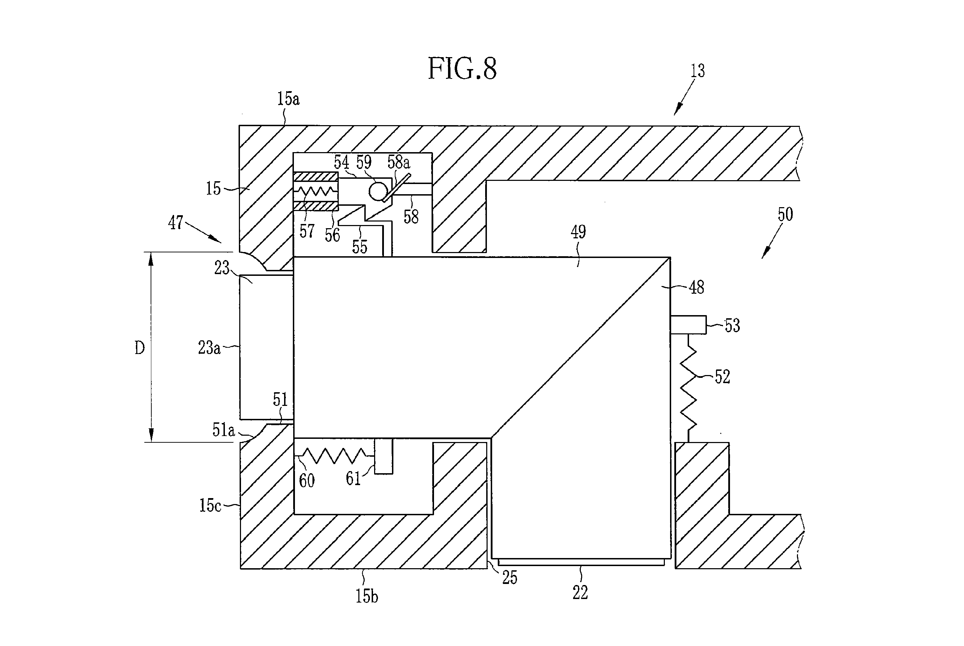

As shown in Fig.8, in a third embodiment, a radiographic cassette 13 is provided with slip-property changing mechanisms 47 in place of the slip-property changing mechanisms 17 of the first embodiment. Each of the slip-property changing mechanisms 47 consists of a foot 48, a rubber 22, a push button 23, an interconnection member 49 interconnecting the push button 23 with the foot 48, and a positioning mechanism 50 for positioning the foot 48.

The respective feet 48 of the slip-property changing mechanisms 47 may protrude through openings 25, which are formed in four corners of a rectangular bottom side 15b of a housing 15. Openings for exposing the push buttons 23 are formed through opposite side surfaces of the housing 15 in both ends of each side surface. Each opening 51 has a recess 51a like the recess 26a of the opening 26 in the first embodiment, and the recess 51a preferably has an external diameter D of 10 mm to 30 mm, for the same reason as described with respect to the first embodiment.

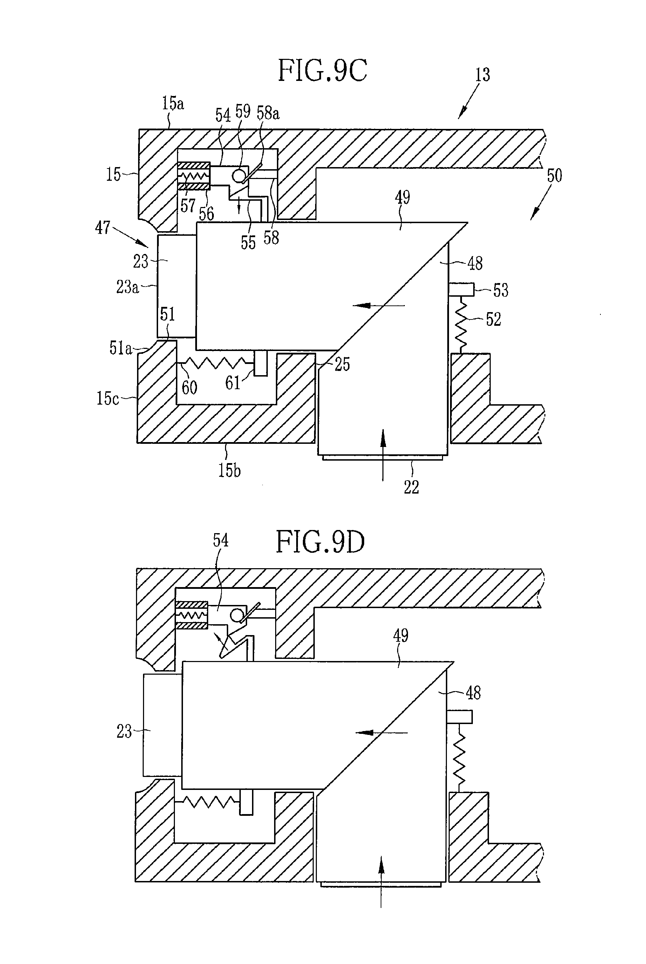

The foot 48 has a substantially cylindrical shape but has a slant top face. The interconnection member 49 also has a substantially cylindrical shape but has a slant end face corresponding to the top face of the foot 48. The push button 23 is secured to an end face of the interconnection member 49 opposite to the slant end face. Pushing the push button 23 inward of the housing 15 will cause the interconnection member 49 to move from a first position shown in Fig.9A to a second position shown in Fig.9C. Since the slant end face of the interconnection member 49 is in planer contact with the slant end face of the foot 48, the pushing force applied to the push button 23 is transmitted through the interconnection member 49 to the foot 48. Thus the foot 48 is moved from a retracted position to a protruded position as the interconnection member 49 is moved from the first position to the second position.

The positioning mechanism 50 includes a coil spring 52 for urging the foot 48 toward the retracted position, a latch mechanism for latching the interconnection member 49 at either the first position or the second position, and a coil spring 60 for urging the interconnection member 49 toward the first position. The coil spring 52 is coupled to the foot 48 through a coupling member 53, and the spring 60 is coupled to the interconnection member 49 through a coupling member 61. The latch mechanism for the interconnection member 49 includes a latch member 54, a hook 55 provided on a side surface of the interconnection member 49 so as to engage with the latch member 54, a base 56 for the latch member 54, a coil spring 57 connecting the latch member 54 to the housing 15 and urging the latch member 54 to a base position on the base 56, a guide member 58 having a guide surface 58a, a guide protrusion 59 engaged with the guide surface 58a to guide the latch member 54 along the guide surface 58a.

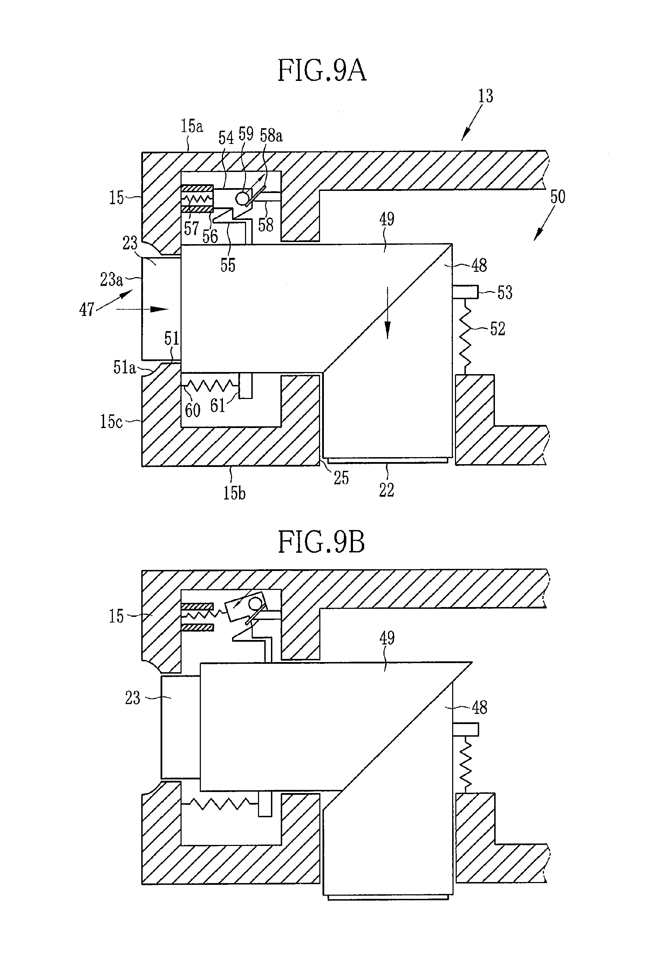

As shown in Fig. 9A and 9B, when the push button 23 is pushed in, the interconnection member 49 moves from the first position to the second position against the force of the spring 60 and acts on the foot 48. As a result, the foot 48 moves from the retracted position to the protruded position against the force of the spring 52. At that time, the hook 55 causes the latch member 54 to move off the base 56 against the force of the spring 57 and move in an upper right direction in the drawings as the guide protrusion 59 being guided along the guide surface 58a. Thus, the latch member 54 is removing from the hook 55.

As shown in Figs . 9B and 9C, when the interconnection member 49 and the foot 48 reach the second position and the protruded position respectively, the latch member 54 gets over the hook 55 and then gets back to the base position on the base 56 according to the force of the coil spring 57. In this position, the latch member 54 is engaged with the hook 55 such that the interconnection member 49 is held in the second position and thus the foot 48 is held in the protruded position. Thus, the foot 48 is maintained in the protruded position even after the push button 23 is released from the pushing force.

As shown in Figs.9C and 9D, when a load of not less than a predetermined amount, e.g. 5 kg, is applied to the bottom face of the foot 48, the foot 48 moves from the protruded position to the retracted position, acting on the interconnection member 49. As a result, the interconnection member 49 moves from the second position back to the first position. At that time, the hook 55 as engaged with the latch member 54 resiliently bends in a direction to leave the latch member 54.

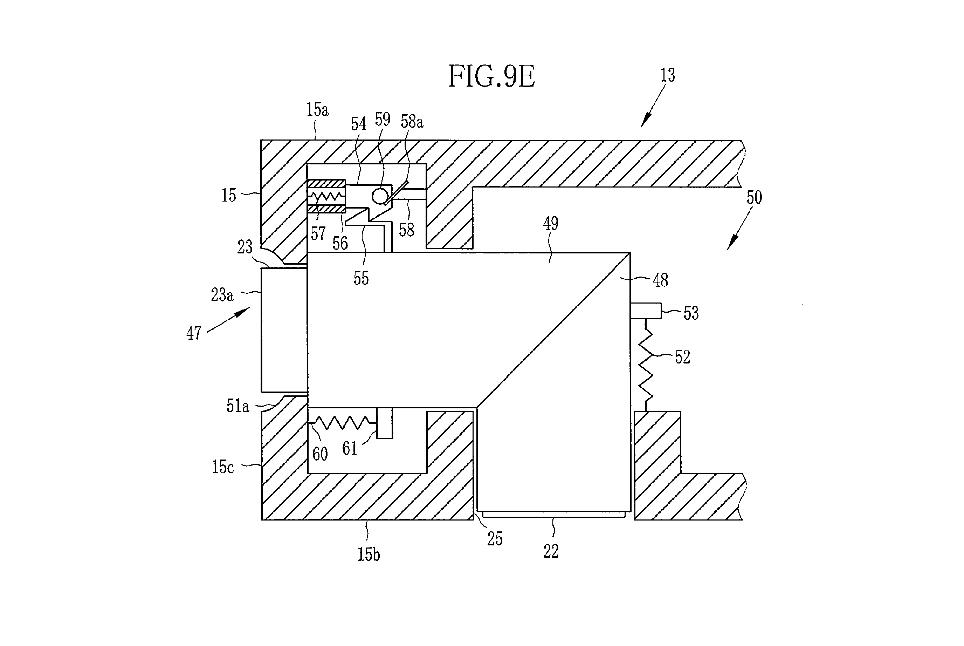

While the foot 48 and the interconnection member 49 is moving to the retracted position and the first position respectively, as shown in Fig.9E, the hook 55 gets over the latch member 54 and returns to an initial position due to its own resiliency. In the initial position, the hook 55 is latched by the latch member 54 to hold the foot 48 and the interconnection member 49 in the retracted position and the first position respectively.

### [Fourth Embodiment]

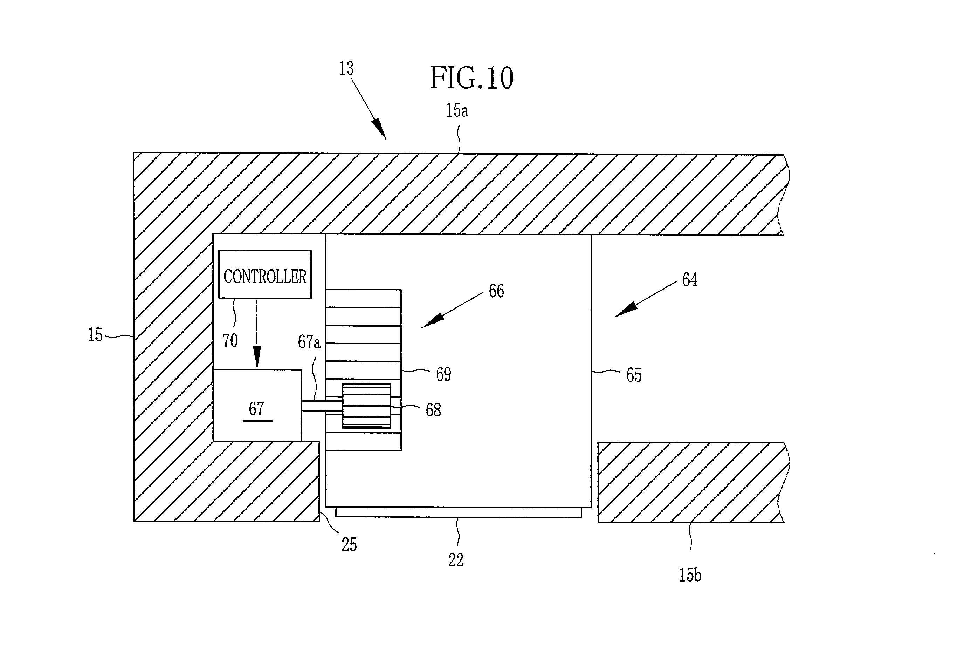

Referring now to Fig.10, a cassette 13 of the fourth embodiment is provided with slip-property changing mechanisms 64 instead of the slip-property changing mechanisms 17 of the first embodiment. Each of the slip-property changing mechanisms 64 includes a foot 65, a rubber 22, and a power transmission mechanism 66 for driving the foot 65.

The power transmission mechanism 66 includes a servo motor 67 as a source of driving force, a pinion gear 68 mounted to a shaft 67a of the servo motor 67, and a rack gear 69 formed on a side surface of the foot 65 so as to be in mesh with the pinion gear 68.

The servo motor 67 rotates the shaft 67a to generate a driving force under the control of the controller 70. The driving force of the servo motor 67 causes the pinion gear 68 to rotate. The rotation of the pinion gear 68 is converted through the rack gear 69 to a linear motion. Thus the foot 65 is moved between a protruded position and a retracted position.

The controller 70 controls the servo motor 67 according to imaging menus given from a console 14. For example, when an imaging in the supine position is instructed, the controller 70 controls the servo motor 67 so as to set the foot 65 at the retracted position. On the other hand, when an imaging in the sitting position, e.g. an imaging of shoulder joint or cubital joint, is instructed, the controller 70 controls the servo motor 67 so as to set the foot 65 at the protruded position.

The foot 65 will move to the retracted position when a load of not less than a predetermined amount, e.g. 5kg or more, is applied to the rubber 22 in the protruded position.

### [Fifth Embodiment]

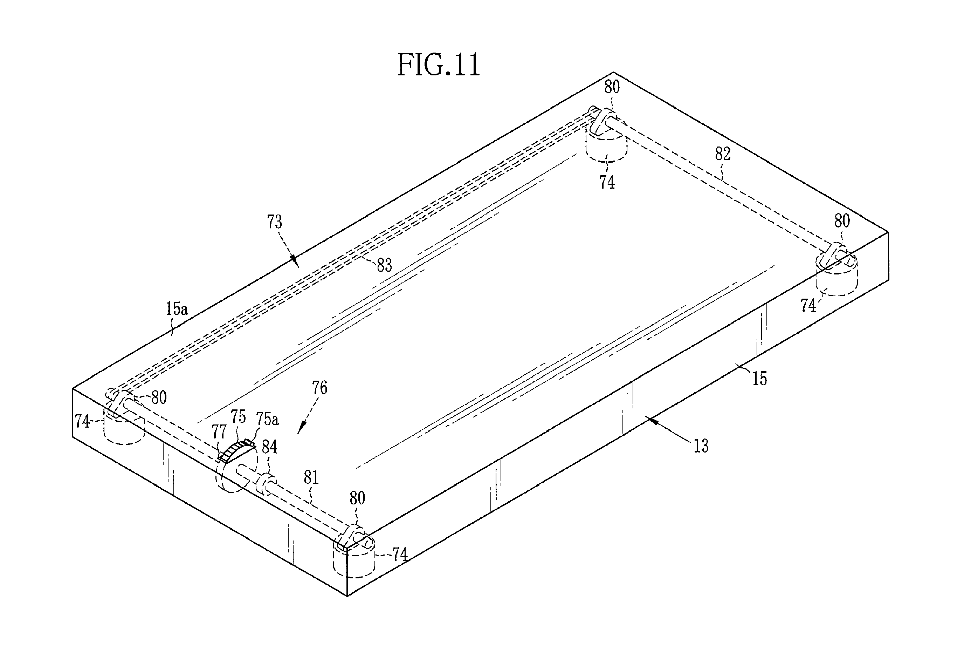

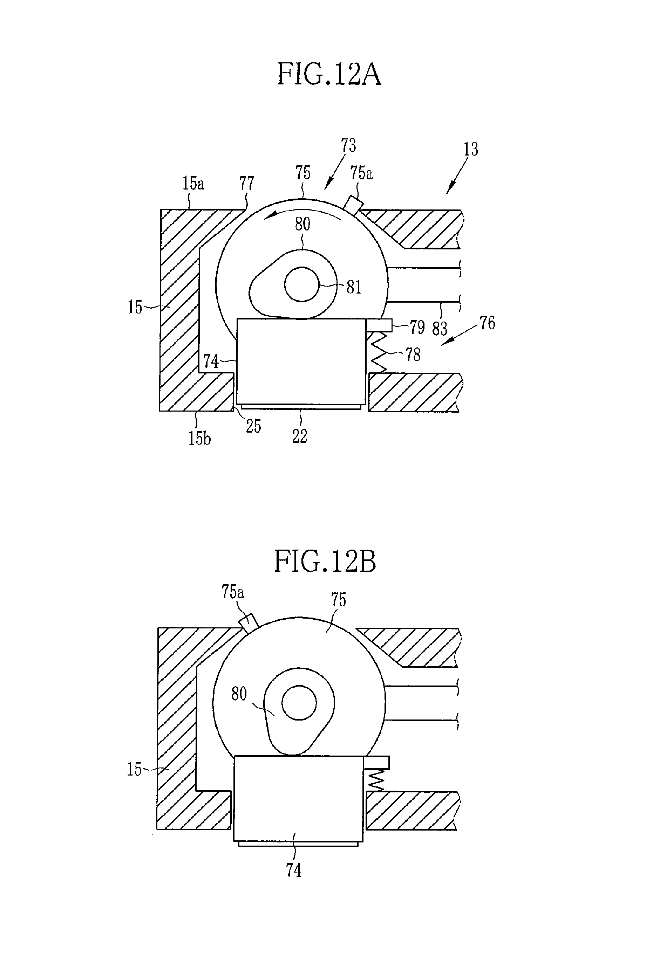

As shown in Figs.11 and 12, a cassette 13 of the fifth embodiment is provided with a single slip-property changing mechanism 73 instead of the four slip-property changing mechanisms 17 of the first embodiment. The slip-property changing mechanism 73 includes four feet 74 disposed in four corners of a housing 15, anti-slip rubbers 22 on the respective bottom faces of the feet 74, a dial disc 75, and an interlocking mechanism 76 for interlocking the feet 74 so as to cooperate with each other. The dial disc 75 is partly exposed through an opening 77 of an irradiation surface 15a of the housing 15, and is operable to bring the feet 74 to a protruded position where the rubbers 22 protrude outward from a bottom side 15b of the housing 15.

The dial disc 75 has a protrusion 75a on the part exposed through the opening 77. The protrusion 75a serves as a tab for turning the dial disc 75 and a stopper for limiting the rotatable range of the dial disc 75 by stopping against an edge of the opening 77. The rotation of the dial disc 75 is transmitted as a driving force through the interlocking mechanism 76 to act on the feet 74, causing the feet 74 to move between a retracted position inside the housing 15 and the protruded position.

The interlocking mechanism 76 includes a coil spring 78 for urging the feet 74 to the retracted position, a coupling member 79 for coupling the spring 78 to the feet 74, cams 80 that rotate in cooperation with the dial disc 75 and act on the feet 74, shafts 81 and 82 connecting the cams 80 to each other, an endless belt 83 connecting the shafts 81 and 82 to each other, and an anti-rotation member 84 for applying a predetermined load to the shaft 81 so as to prevent the shaft 81 from being rotated by a force of not more than a predetermined magnitude.

The shafts 81 and 82 are placed along opposite shorter sides of the rectangular housing 15. On one shaft 81 are mounted the dial disc 75, two cams 80, the endless belt 83 and the anti-rotation member 84. On the other shaft 82 are mounted two cams 80 and the endless belt 83. These two shafts 81 and 82 are interconnected through the endless belt 83 to rotate in the same direction in cooperation with each other.

As shown in Figs.12A and 12B, turning the dial disc 75 will cause the cams 80 to rotate with the shafts 81 and 82, acting on the feet 74. As the dial disc 75 is turned counterclockwise in the drawing while the feet 74 are in the retracted position, the feet 74 move to the protruded position against the urging force of the spring 78. On the other hand, as the dial disc 75 is turned clockwise in the drawing while the feet 74 are in the protruded position, the feet 74 move to the retracted position according to the urging force of the spring 78.

In addition, when a load of not less than a predetermined amount is applied to the bottom faces of the four feet 74 in the protruded position, e.g. 20 kg in total, the cams 80 rotate clockwise in the drawing, so that the feet 74 move to the retracted position according to the urging force of the spring 78. However, if the load applied to the bottom faces of the feet 74 is less than the predetermined amount, the feet 74 are held in the protruded position because of the load applied from the anti-rotation member 84 to the shaft 81.

### [Sixth Embodiment]

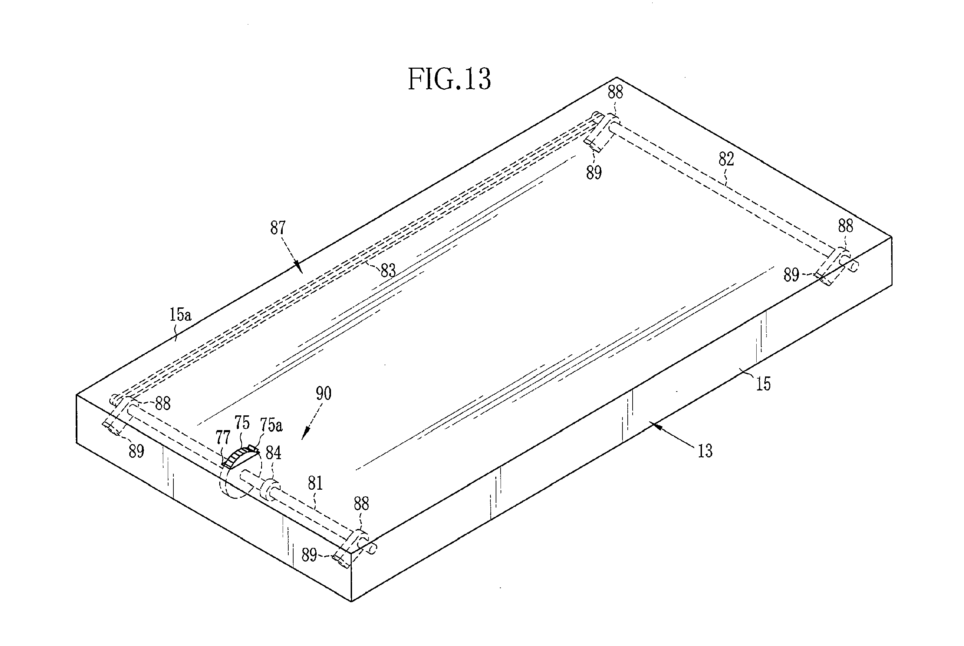

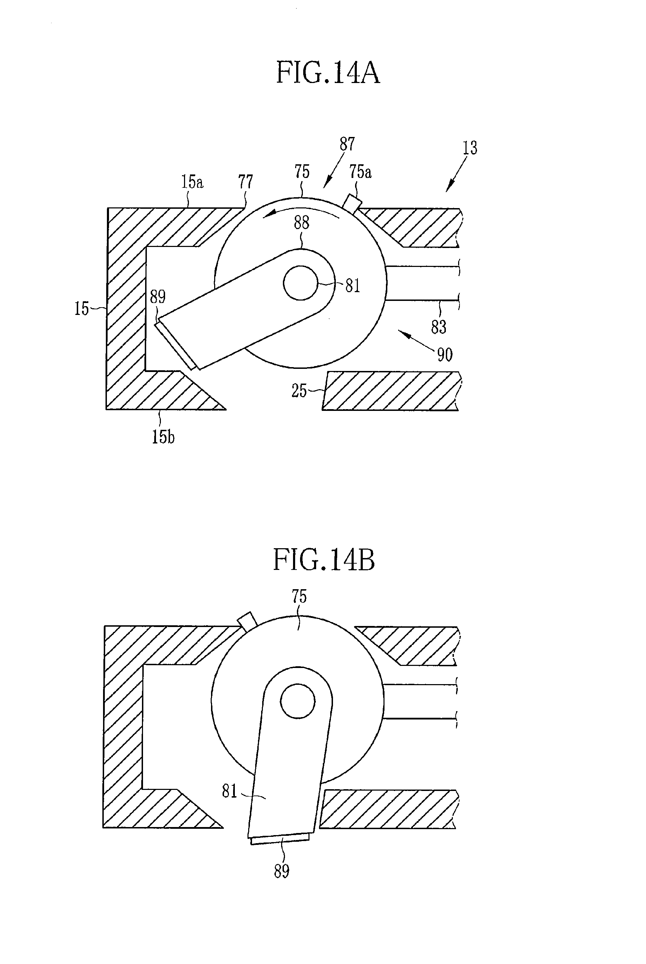

As shown in Figs.13 and 14, a cassette 13 of the sixth embodiment is provided with a single slip-property changing mechanism 87 instead of the four slip-property changing mechanisms 17 of the first embodiment. The slip-property changing mechanism 87 includes four feet 88 disposed in four corners of a housing 15, anti-slip rubbers 89 on the respective distal end faces of the feet 88, a dial disc 75, and an interlocking mechanism 90 interconnecting the feet 88 so that the feet 88 can cooperate with each other.

Turning the dial disc 75 will cause the feet 88 to swing between a retracted position as shown in Fig.l4A and a protruded position as shown in Fig.14B. The distal end of each foot 88, which protrudes outward from the bottom side 15b in the protruded position, is slant to a bottom side 15b of a housing 15 such that the load is applied on the protruded foot 88 in the direction to move the feet 88 toward the retracted position when the cassette 13 is laid with its bottom side 15b down.

The interlocking mechanism 90 includes shafts 81 and 82 coupling the feet 88 to each other, an endless belt 83, and a anti-rotation member 84 for applying a predetermined load to the shaft 81.

On one shaft 81 are mounted the dial disc 75, two feet 88, the endless belt 83 and the anti-rotation member 84. On the other shaft 82 are mounted two feet 82 and the endless belt 83. These two shafts 81 and 82 are interconnected through the endless belt 83 to rotate in the same direction in cooperation with each other.

As shown in Figs.14A and 14B, turning the dial disc 75 will cause the feet 88 to swing with the shafts 81 and 82. As the dial disc 75 is turned counterclockwise in the drawing while the feet 88 are in the retracted position, the feet 88 also swing clockwise to the protruded position. On the other hand, as the dial disc 75 is turned clockwise in the drawing while the feet 88 are in the protruded position, the feet 88 also swing to the retracted position.

In addition, when a load of not less than a predetermined amount is applied to the bottom faces of the feet 74 in the protruded position, e.g. 20 kg in total of the four, the feet 88 rotate clockwise in the drawing, moving to the retracted position. However, if the load applied to the bottom faces of the feet 88 is less than the predetermined amount, the feet 88 are held in the protruded position because of the load applied from the anti-rotation member 84 to the shaft 81.

Although the dial disc 75 is designed to protrude outward from an irradiation surface 15a of the housing 15 in the fifth and sixth embodiments, the dial disc 75 may be modified so as not to protrude outward from the irradiation surface 15a, like in the push buttons 23 in the first and second embodiments.

In the above embodiments, the anti-slip rubber 22 or 89 is put on the bottom face or distal end of each foot so that the slip properties or smoothness of the cassette 13 will be better in the retracted position than in the protruded position. However, it may be possible to make the friction factor of the bottom face or distal end of each foot lower than that of the bottom side 15b so as to lower the smoothness of the cassette 13 when the feet are set in the retracted position in comparison with when the feet are in the protruded position.

### [Seventh Embodiment]

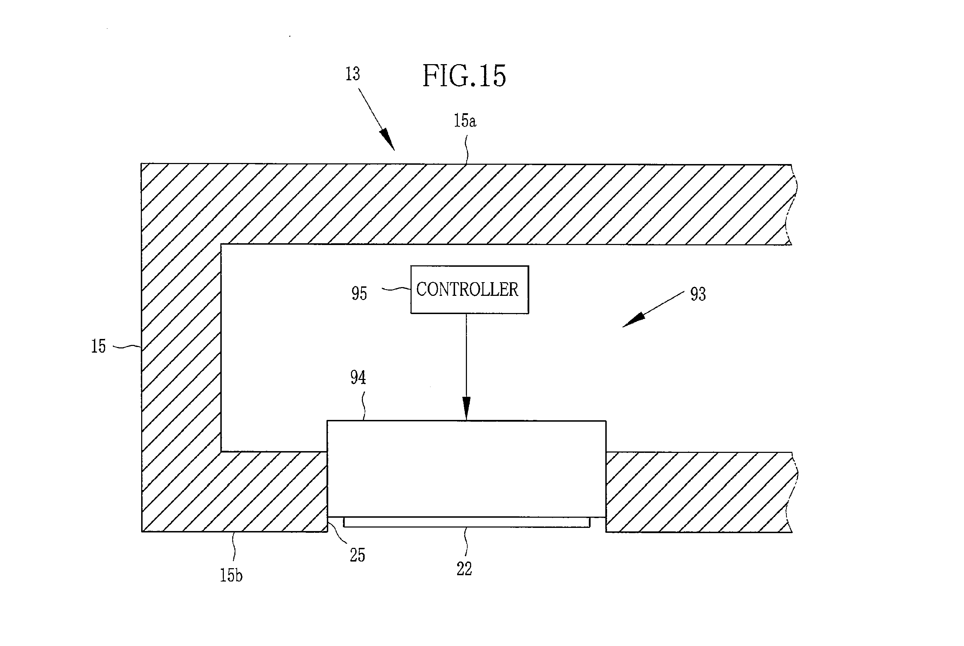

As shown in Fig.15, a cassette of the seventh embodiment is provided with slip-property changing mechanisms 93 in place of the slip-property changing mechanisms 17 of the first embodiment. Each of the slip-property changing mechanism 93 includes a foot 94 and a rubber 22. The feet 94 are driven by a controller 95.

The foot 94 is a laminated piezoelectric element that consists of a plurality of piezoelectric layers and electrode layers, which are not shown in the drawings though. The foot 94 will expand or contract to move a protruded position or a retracted position, respectively, when a voltage is selectively applied under the control of the controller 95.

The controller 95 controls the feet 94 according to imaging menus given from a console 14. For example, when an imaging in the supine position is instructed, the controller 95 controls the feet 94 so as to be set at the retracted position. On the other hand, when an imaging in the sitting position, e.g. an imaging of shoulder joint or cubital joint, is instructed, the controller 95 controls the feet 94 so as to be at the protruded position.

### [Eighth Embodiment]

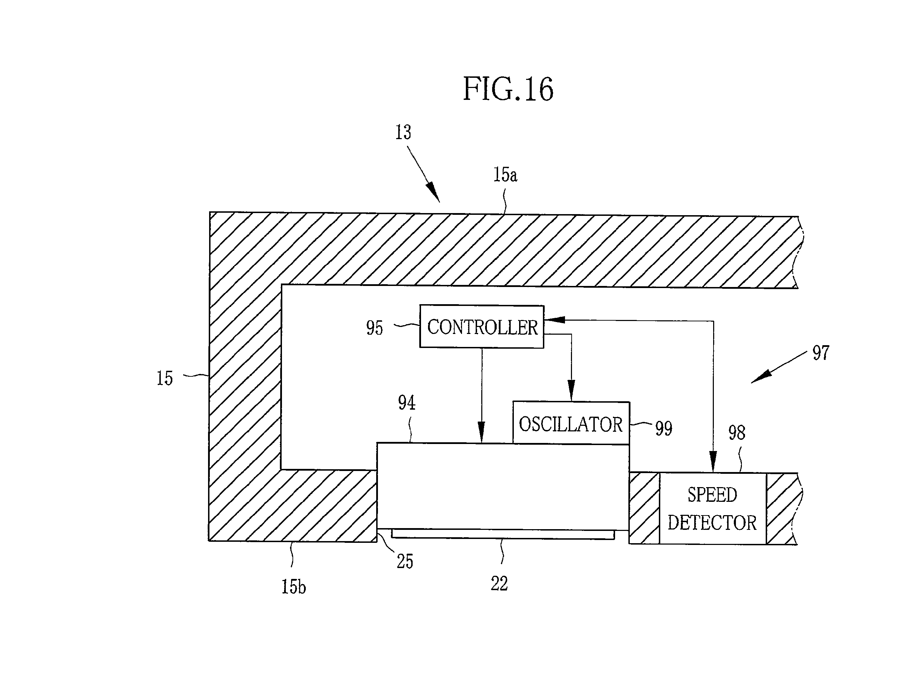

Referring to Fig.16, a cassette 13 of the eighth embodiment is provided with slip-property changing mechanisms 97 in place of the slip-property changing mechanisms 17 of the first embodiment. The slip-property changing mechanism 97 include feet 94, rubbers 22, a controller 95, a speed detector 98 for detecting the speed of the cassette 13, and oscillators 99 for giving the feet 94 a vibration of a magnitude corresponding to the speed of the cassette 13.

The speed detector 98 is provided with a light-emitting element and an imaging device, which are omitted from the drawings though. The imaging device may successively capture images from light projected from the light-emitting element and then reflected from a surface G of a bed or the like. The speed detector 98 detects the speed of the cassette 13 from the change in the images successively captured by the imaging device. The speed of the cassette 13 is input to the controller 95.

The controller 95 controls the oscillator 99 according to the speed of the cassette 13. Specifically, the controller 95 controls the oscillator 99 such that the oscillation magnitude changes in proportion to the speed of the cassette 13. When the voltage is applied to the oscillator 99 under the control of the controller 95, the oscillator 99 oscillates and causes the foot 94 to vibrate. Through the vibration of the feet 94, an operator of the cassette 13 can sense the motion of the cassette 13 during positioning or adjusting the attitude of the cassette 13.

It is to be noted that the number of feet provided in the cassette is not limited to four as described in the above embodiments, but may be one, two, three, or five or more.

### [Ninth Embodiment]

As shown in Fig.l7, a cassette 13 of the ninth embodiment is provided with a single slip-property changing mechanism 101 instead of four slip-property changing mechanisms 17 of the first embodiment. The slip-property changing mechanism 101 includes a transducer 102 and a controller 103 for driving the transducer 102. The transducer 102 is shaped into a sheet and put on the entire area of a bottom side 15b of a housing 15.

The transducer 102 has a laminated structure consisting of electroactive polymer layers and random-patterned electrode layers, which are omitted from the drawings though. The electroactive polymer layer deforms when a voltage is applied thereto. Because of the random patterns of the electrode layers, the transducer 102 deforms to have concavities and convexities when supplied with the voltage under the control of the controller 103. In this uneven state, the transducer 102 lowers the smoothness of the bottom side 15b. Without the voltage supply, on the other hand, the transducer 102 is even and increases the bottom surface smoothness.

The controller 103 controls the feet 94 according to imaging menus given from a console 14. For example, when an imaging in the supine position is instructed, the controller 103 controls the transducer 102 to get scabrous. On the other hand, when an imaging in the sitting position, e.g. an imaging of shoulder joint or cubital joint, is designated, the controller 103 controls the transducer 102 to be flat and even.

It is to be noted that the above-described slip-property changing mechanisms may be replaced with a slip-property changing mechanism having functional fluid gels that may change the friction factor of a material itself. The functional fluid gels may include magneto-rheological fluid, electro-rheological fluid, and the like.

It should be understood that the embodiments of the present invention have been disclosed for illustrative purposes only. Those skilled in the art will appreciate that various modifications, additions and substitutions are possible without departing from the scope and spirit of the invention as disclosed in the accompanying claims.

## Claims

1. A radiographic cassette comprising:
a housing (15) containing a radiographic detector (16) therein, said housing having an irradiation surface (15a) on a top side thereof for receiving radioactive rays from above;
at least a foot (21, 48, 65, 74, 88, 94) mounted in said housing and movable between a protruded position where said foot protrudes outward from a bottom side of said housing opposite to said irradiation surface, and a retracted position where said foot is contained inside said housing; and
a switching device (17, 37, 47, 64, 73, 87, 93, 97) for switching said foot between the protruded position and the retracted position, thereby to change slip properties of the bottom side of said housing.

2. The radiographic cassette as recited in claim 1, wherein said foot is adapted to lower surface smoothness of the bottom side of said housing in the protruded position than in the retracted position.

3. The radiographic cassette as recited in claim 1, further comprising a mechanism (24, 50, 66, 76, 90) for causing said foot to move to the retracted position when a load of not less than a predetermined amount is applied to said irradiation surface while said cassette is placed with the bottom side down and said foot in the protruded position.

4. The radiographic cassette as recited in claim 1, wherein said foot includes a plurality of feet.

5. The radiographic cassette as recited in claim 1, wherein said foot (21, 48, 74, 88) is manually movable between the protruded position and the retracted position.

6. The radiographic cassette as recited in claim 5, wherein said switching device includes a push button (23) that may be pushed into said housing, said push button directly acting on said foot in the retracted position to cause said foot to move from the retracted position to the protruded position with said push button being pushed.

7. The radiographic cassette as recited in claim 6, wherein said push button has a top face (23a) that is flat to an external surface of said housing or set back inward from said external surface.

8. The radiographic cassette as recited in claim 6, wherein said housing has a recess (26a, 51a) around said top face of said push button.

9. The radiographic cassette as recited in claim 8, wherein said recess has an external diameter of 10 mm to 30 mm.

10. The radiographic cassette as recited in claim 4, wherein said switching device comprises an interlocking mechanism (76) for interlocking a plurality of said feet with each other.

11. The radiographic cassette as recited in claim 1, wherein said switching device comprises an actuator (67) for driving said foot to move between the protruded position and the retracted position.

12. The radiographic cassette as recited in claim 11, wherein said switching device further comprises a controller (70, 95) for controlling said actuator to switch over said foot automatically between the protruded position and the retracted position according to imaging menus.

13. The radiographic cassette as recited in claim 1, wherein said foot is movable along a line perpendicular to the bottom side of said housing.

14. The radiographic cassette as recited in claim 1, wherein said foot has an end face having a higher friction factor than an external surface of the bottom side of said housing, said end face being brought into contact with a surface on which said cassette is placed with said foot in the protruded position.

15. A radiographic cassette comprising:
a housing (15) containing a radiographic detector therein, said housing having an irradiation surface (15a) on a top side thereof for receiving radioactive rays from above; and
a slip-property changing device (17, 37, 47, 64, 73, 87, 93, 97, 101) for changing slip properties of a bottom side (15b) of said housing opposite to said irradiation surface.
